# FASCICULE DE BREVET EUROPEEN

(11) **EP 3 011 712 B1**
(45) Date de publication et mention de la délivrance du brevet: **12.04.2017**
(21) Numéro de dépôt: 14713204.7
(22) Date de dépôt: 28.02.2014
(51) Int. Cl.: H04L 29/06, A63F 13/30

(54) **PROCÉDÉ DE COMMUNICATION POUR UNE APPLICATION INTERACTIVE ENTRE TERMINAUX DANS UNE SALLE DE PROJECTION SUR ÉCRAN**
KOMMUNIKATIONSVERFAHREN FÜR EINE INTERAKTIVE ANWENDUNG ZWISCHEN ENDGERÄTEN IN EINEM BILDSCHIRMPROJEKTIONSRAUM
COMMUNICATION METHOD FOR AN INTERACTIVE APPLICATION BETWEEN TERMINALS IN A SCREEN PROJECTION ROOM

(30) Priorité: 20.06.2013 FR 1355886
(43) Date de publication de la demande: 27.04.2016
(73) Titulaire: Highlands Technologies Solutions, 06560 Valbonne (FR)
(72) Inventeur: BORGOGNO, Sylvain, F-06100 Nice (FR)
(74) Mandataire: Cabinet Plasseraud
(86) Numéro de dépôt international: PCT/FR2014/050451
(87) Numéro de publication internationale: WO 2014/202848

(56) Documents cités:
- US-A1- 2005 039 210
- US-A1- 2009 186 700
- US-A1- 2011 195 790

## Description

L'invention concerne le domaine de l'audiovisuel interactif. L'invention concerne plus particulièrement un procédé de communication pour une application interactive entre terminaux dans une salle de projection sur écran.

Dans le contexte où les habitudes de consommation de contenus audiovisuels changent avec l'apparition d'équipement mobile de communication avec écran d'affichage de contenus audiovisuels, tel qu'un téléphone mobile ou une tablette numérique, l'exploitation cinématographique cherche à maintenir une certaine fréquentation et trouver de nouveaux leviers de croissance.

Ce déploiement numérique actuel permet de proposer une expérience cinématographique nouvelle intégrant l'interactivité entre le spectateur et l'écran de cinéma, répondant ainsi aux besoins des clients, des annonceurs et des professionnels du secteur.

Cette expérience cinématographique nouvelle est aujourd'hui fournie par une plateforme, préférentiellement propre à être installée dans une chaîne de traitement numérique existante, qui permet aux spectateurs, via leur équipement mobile de communication, de vivre des expériences ludiques et interactives en temps réel, telles que des jeux sociaux.

Le document de l'art antérieur US2011/0195790 décrit un système pour fournir du contenu interactif pour plusieurs utilisateurs en réseau dans un lieu commun. Une 'plateforme' est définie ici comme un ensemble de composants matériels et/ou logiciels aptes à communiquer entre eux.

Par exemple, une telle plateforme comprend:
- un lecteur de contenus audiovisuels, tels que par exemple des bandes-annonces, des publicités, des jeux, etc.,
- un serveur Web,
- une base de données stockant les contenus audiovisuels et des comptes utilisateurs, et
- une application logicielle installée sur chaque équipement mobile d'un joueur pour l'interfaçage via un navigateur Web avec le serveur Web.

Le serveur Web fournit une liste de services garantissant non seulement la gestion des applications logicielles, de la base de données et de l'ensemble des écrans du cinéma connectés à la plateforme, mais également les liaisons de communication entre ces composants. Le système de communication repose sur un protocole HTTP en mode synchrone, de sorte que, à chaque interaction avec l'application logicielle, une requête synchrone est envoyée au serveur Web qui traite l'information, la communique à la base de données, attend une réponse de celle-ci, actualise l'information, puis envoie la réponse à l'application logicielle. Aussi, le système de communication reste passif tant que l'utilisateur n'envoie pas de requête.

Selon cet exemple, sachant qu'une salle de cinéma peut accueillir jusqu'à 700 spectateurs et qu'un cinéma peut disposer d'environ 20 salles, il faut, pour garantir une expérience ludique, interactive et en temps réel des joueurs, être capable de gérer jusqu'à 150 000 requêtes par seconde. La qualité de l'expérience est impossible à garantir dès lors qu'une technologie de communication PHP 5.1 et un système de communication HTTP synchrone sont utilisés, comme c'est classiquement le cas. En effet, en se basant uniquement sur un système de communication synchrone, les problèmes suivants apparaissent :
- la latence augmente linéairement en fonction du nombre de joueurs, jusqu'à devenir visible et dégrader l'expérience,
- cette latence visible par les joueurs se traduit pour le serveur Web par une forte montée en charge, limitant de fait le nombre potentiel de joueurs simultanés,
- la mise à jour de l'interface logicielle s'effectue en réponse à une requête.

Pour pallier ce dernier inconvénient, un processus de rafraîchissement peut être mis au point, qui simule une requête de l'application logicielle, mais augmente inévitablement le nombre de requêtes à traiter.

La présente invention vise à améliorer la situation.

La présente invention vise plus particulièrement à fournir une plateforme, propre à être installée dans une chaîne de traitement numérique existante, pour la mise en oeuvre du procédé selon l'invention pour permettre aux spectateurs, via leur équipement mobile de communication, de vivre des expériences ludiques et interactives en temps réel, sans dégradation de la qualité desdites expériences, y compris lorsque le nombre de joueurs simultanés dépasse quelques dizaines d'individus.

A cette fin, la présente invention consiste selon un premier aspect en un procédé, par ailleurs conforme au préambule ci-dessus, dans lequel chaque terminal est un noeud interactif connecté à un routeur associé à un serveur relié à un dispositif de projection cinématographique de la salle, le procédé comprenant les étapes mises en oeuvre par un routeur interconnectant une pluralité de noeuds interactifs et au moins une base de données et consistant à :
- recevoir, depuis un noeud interactif inscrit sur la base de données comme ayant souscrit à un service de publication, une demande de publication comprenant une notification d'événement et au moins des données d'identification dudit service,
- transmettre, à la base de données, chaque demande de publication reçue pour identifier au moins un noeud interactif inscrit sur la base de données comme ayant souscrit audit service dont les données d'identification sont comprises dans la demande de publication,
- recevoir, depuis la base de données, les données d'identification de chaque noeud interactif identifié, et
- transmettre, à chaque noeud interactif identifié, la notification d'événement reçue pour sa publication.

Ainsi, le procédé de communication selon l'invention propose une solution d'intercommunication temps réel massivement collective pour la synchronisation, la diffusion et la projection de contenus interactifs dans les cinémas.

Selon une particularité, la pluralité de noeuds interactifs comprend une pluralité d'équipements mobiles de communication et au moins un dispositif de projection cinémato graphique.

Selon une autre particularité, la pluralité de noeuds interactifs comprend en outre un lecteur de contenu interactif.

Selon une autre particularité, le procédé comprend en outre les étapes consistant à :
- recevoir, depuis un équipement mobile de communication, une demande de souscription comprenant des données d'identification dudit équipement et des données d'identification d'un fournisseur de service et/ou d'une chaîne de cinéma et/ou d'un dispositif de projection cinématographique, pour souscrire à un service de publication associé au moins audit fournisseur de service et/ou à ladite chaîne de cinéma et/ou audit dispositif de projection cinématographique, respectivement,
- transmettre, à la base de données, les données d'identification dudit équipement et dudit fournisseur de service et/ou de ladite chaîne de cinéma et/ou dudit dispositif de projection cinématographique pour inscription dudit équipement audit service de publication.

Selon une autre particularité, le routeur est propre à répartir les demandes qu'il reçoit depuis les noeuds interactifs entre plusieurs bases de données.

Selon une autre particularité, plusieurs routeurs sont agencés pour interconnecter la pluralité de noeuds interactifs et les autres composants du système de communication.

Le procédé selon l'une ou l'autre de ces deux dernières particularités permet avantageusement d'augmenter la capacité de traitement de requêtes concurrentes.

Selon une autre particularité, les étapes de réception/transmission sont réalisées selon un protocole de multiplexage d'entrées/sorties.

Selon une autre particularité, les communications reçues/transmises sont programmées en langage Node.js.

Selon une autre particularité, la base de données comprend un serveur de dictionnaire distant.

Selon un deuxième aspect, l'invention concerne un programme d'ordinateur comportant des instructions pour la mise en oeuvre du procédé selon l'une quelconque des revendications 1 à 9, lorsque ce programme est exécuté par un processeur.

D'autres caractéristiques et avantages de l'invention ressortiront clairement de la description qui en est faite ci-après, à titre indicatif et nullement limitatif, en référence aux dessins annexés, dans lesquels :
- la figure 1 représente un système de communication dans lequel un mode de réalisation du procédé selon l'invention est mis en oeuvre et illustre le flux de communication utilisé selon ce mode de réalisation,
- la figure 2 représente un ordinogramme d'un mécanisme de souscription selon un mode de réalisation du procédé selon l'invention,
- la figure 3 représente un ordinogramme d'un mécanisme de publication selon un mode de réalisation du procédé selon l'invention, et
- la figure 4 représente un ordinogramme d'un mécanisme de publication selon un autre mode de réalisation du procédé selon l'invention.

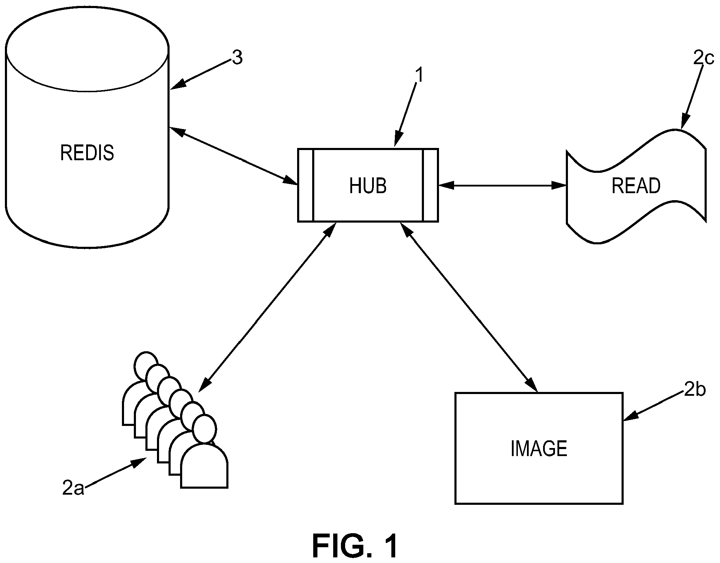

Le procédé de communication S selon la présente invention peut être mis en oeuvre dans un système de communication tel qu'illustré sur la figure 1. Ce système de communication comprend une pluralité de noeuds interactifs 2a et 2b et une plateforme de communication comprenant au moins un routeur 1 et au moins une base de données 3.

La pluralité de noeuds interactifs peut comprendre une pluralité d'équipements mobiles de communication 2a et au moins un dispositif de projection cinématographique 2b.

Chaque équipement mobile de communication 2a peut plus particulièrement être un téléphone mobile, préférentiellement de type Smartphone, ou une tablette numérique. Sur chaque équipement mobile de communication est installée une application logicielle réalisant l'interfaçage logiciel au moins avec le routeur par exemple via un navigateur Web.

Chaque dispositif de projection cinématographique 2b comprend au moins un dispositif d'affichage, consistant par exemple en un dispositif de projection pour écran de salle de cinéma, ou en un écran de télévision, ce dernier étant par exemple situé dans le hall d'un cinéma. Chaque dispositif de projection cinématographique peut en outre comprendre un DIP (Digital Interactive Player) pour fournir au dispositif de projection, les contenus à diffuser dans la salle de cinéma, et/ou un LIP (Lobby Interactive Player) pour fournir à l'écran de télévision, les contenus à diffuser dans le hall du cinéma.

La pluralité de noeuds interactifs peut comprendre en outre un lecteur de contenu interactif 2c. Ce lecteur, dans la mesure où il n'est pas lui-même un DIP ou un LIP, peut être tout serveur d'un fournisseur de service. Le fournisseur de service peut être le fournisseur du système de communication, une chaîne de cinéma, un annonceur, etc. Le lecteur de contenu interactif stocke un contenu interactif associé à une application interactive donnée pour le transmettre via le routeur 1 à au moins un noeud interactif identifié par interrogation de la base de données selon le procédé décrit ci-dessous.

La base de données 3 peut plus particulièrement comprendre un serveur de dictionnaire distant.

Le serveur de dictionnaire distant est un système de gestion de base de données dit « clef-valeur », préférentiellement évolutif et de très hautes performances. Il intègre une interface de connexion par laquelle il communique avec le routeur. Il permet de manipuler des types de données simples : chaînes de caractères, tableaux associatifs, listes, ensembles et ensembles ordonnés. Il peut conserver l'intégralité des données en mémoire vive (RAM). Cela permet d'obtenir d'excellentes performances en évitant les accès disques, particulièrement coûteux en temps. Lorsque la taille des données est trop importante pour tenir en mémoire, le serveur de dictionnaire distant peut également utiliser de la mémoire virtuelle. Afin d'assurer la conservation des données en cas d'incident - la mémoire vive étant volatile - le serveur de dictionnaire distant offre la possibilité de « capturer » l'état de la base de données dans un fichier. Cette technique ne permettant pas de garantir la conservation des manipulations effectuées entre deux captures, il est également possible de conserver une trace de toutes ces manipulations. En cas d'incident, la base peut être restaurée en les ré-appliquant dans l'ordre. Le serveur de dictionnaire distant supporte la réplication via un modèle maître-esclave à des fins de résistance aux pannes et de répartition de la charge. Toutes les écritures doivent se faire via l'instance maîtresse, mais il est possible de faire des lectures sur les instances esclaves - si toutefois il n'y a pas de besoin critique d'accéder avec certitude à des données mises à jour.

Le routeur 1 est l'élément central du système de communication. Il assure le routage par paquets des données au moins entre l'interface réseau de chaque noeud interactif et l'interface réseau du serveur de dictionnaire distant. Il est associé à un serveur, c'est-à-dire qu'il comprend, ou équivalemment est compris dans, un serveur qui comprend au moins un processeur pour la mise en oeuvre du procédé selon l'invention par exécution d'un programme d'ordinateur comportant des instructions correspondantes. Ce serveur est relié à au moins un dispositif de projection sur écran, ou plus particulièrement un dispositif de projection cinématographique de la salle, au moins pour lui transmettre, et éventuellement contrôler, le contenu audiovisuel à projeter.

Plus particulièrement, le routeur 1 intègre une pluralité d'interfaces de connexion réseau lui permettant de communiquer avec i) chaque dispositif de projection cinématographique, et notamment avec le DIP et le LIP, par exemple via une liaison Ethernet, ii) chaque équipement mobile de communication, par exemple via un réseau WiFi ou 3G, iii) le serveur de dictionnaire distant, par exemple via Internet, et iv) le lecteur de contenu interactif, par exemple via Internet ou Ethernet.

Le routeur peut en outre communiquer avec des applications spécifiques au cinéma, ces applications étant gérées par des équipements tels qu'un TMS (Theater Management System) qui permet de piloter l'ensemble du matériel numérique équipant les cabines du cinéma, y compris les lumières ou les rideaux, un système de cartes de fidélité et un système de billetterie.

Le routeur peut également accéder à un « cloud », c'est-à-dire à un espace de stockage mutualisé et virtualisé, permettant la gestion des contenus, des comptes utilisateur, le contrôle de l'application mobile et l'émission de rapports d'activité.

Le routeur peut encore assurer :
- le routage et la sécurité de machines virtuelles du système de communication,
- l'interface de gestion des applications,
- l'interface de configuration des services,
- la diffusion en flux ou « streaming » de contenus audiovisuels, et
- la tenue d'un historique des événements.

Le routeur 1 récupère des flux de données circulant dans le système de communication. Ces flux de données comprennent aux moins les requêtes émises par les noeuds interactifs du système de communication et des contenus audiovisuels. Ces flux peuvent en outre comprendre de nouveaux progiciels interactifs sélectionnés pour le routeur par l'exploitant du système de communication. Le routeur peut encore vérifier régulièrement si de nouvelles données sont disponibles, télécharger ces nouvelles données, et en accuser réception. Inversement, le routeur peut récupérer des journaux d'historique et d'autres informations d'usage, qu'il peut être nécessaire de renvoyer vers d'autres composants du système de communication. Enfin, le routeur peut bénéficier d'un mécanisme de nettoyage pour purger les données devenues inutiles.

Le système de communication peut mettre en oeuvre un procédé de communication S selon un mode asynchrone. Ce mode de communication est défini par opposition au mode synchrone selon lequel le procédé de communication consiste à attendre une réponse avant de retourner la sienne.

La communication peut ainsi être organisée autour de l'exécution d'événements. Un événement consiste en une étape de transmission et/ou de réception d'un composant du système à un autre. Un événement consiste par exemple en la transmission d'une requête émise par un joueur depuis son équipement mobile via l'application logicielle dédiée.

Le système de communication peut en outre être basé sur un mécanisme de multiplexage des entrées/sorties. Ce mécanisme permet de faire passer plusieurs informations à travers un seul canal de communication et de partager une même ressource entre plusieurs utilisateurs. Il existe deux techniques principales de multiplexage : le multiplexage temporel et le multiplexage fréquentiel.

Le système de communication permet ainsi d'augmenter la capacité de traitement de requêtes concurrentes, c'est-à-dire simultanément transmises, qui ont été émises depuis la pluralité de noeuds interactifs. Effectivement, le routeur 1 ne fait que transmettre les requêtes reçues aux ressources *ad hoc*, de sorte que les requêtes ne sont jamais mises en attente de traitement dans une file d'attente susceptible d'engorger et donc de retarder le système de communication résultant en une dégradation de l'expérience interactive pour le joueur. Au contraire, dans cette configuration, le système de communication reste avantageusement disponible pour recevoir des requêtes, même pendant le traitement de plusieurs autres requêtes.

Le procédé de communication S selon l'invention met en oeuvre, sur la base du système de communication décrit ci-dessus, un mécanisme de publication avantageux permettant aux utilisateurs de vivre en temps réel des expériences ludiques et interactives.

Pour bénéficier de cet avantage, il peut être demandé à tout utilisateur de souscrire à un service correspondant. Le procédé de communication prévoit à cet effet au moins le mécanisme de souscription consistant en les étapes de communication mise en oeuvre par le routeur 1 et consistant à :
- recevoir S60, depuis un équipement mobile de communication 2a, une demande de souscription comprenant des données d'identification dudit équipement et des données d'identification d'un dispositif de projection cinématographique 2b, pour souscrire à un service associé au moins audit dispositif de projection cinématographique, et
- transmettre S80, au serveur de dictionnaire distant 3, les données d'identification dudit équipement et du dispositif de projection cinématographique pour enregistrement de la souscription dudit équipement audit service, conjointement aux données d'identification dudit service.

La demande de souscription peut plus largement être transmise par tout équipement de communication d'un utilisateur, typiquement son ordinateur personnel à domicile ; l'essentiel étant que soit communiqué avec la demande de souscription des données d'identification d'un équipement mobile de communication via lequel l'utilisateur interagira avec le système de communication, notamment lorsqu'il sera au cinéma.

Le routeur 1 est là encore le point central du système de communication et sert à orchestrer les différentes requêtes asynchrones émises par les équipements mobiles de communication, les fournisseurs de services et éventuellement les dispositifs de projection cinématographique. Dès lors, une des fonctionnalités critiques du routeur, ou du serveur qui l'héberge, est la gestion des inscriptions et désinscriptions aux différents services accessibles. Cette gestion consiste plus particulièrement à gérer les différentes connexions entre interfaces de connexion de façon à permettre de s'abonner ou se désabonner auxdits services.

S'agissant ici du domaine de l'audiovisuel interactif, lesdits services peuvent être plus particulièrement définis comme des salons de discussions stockées, au moins temporairement, dans le serveur de dictionnaire distant.

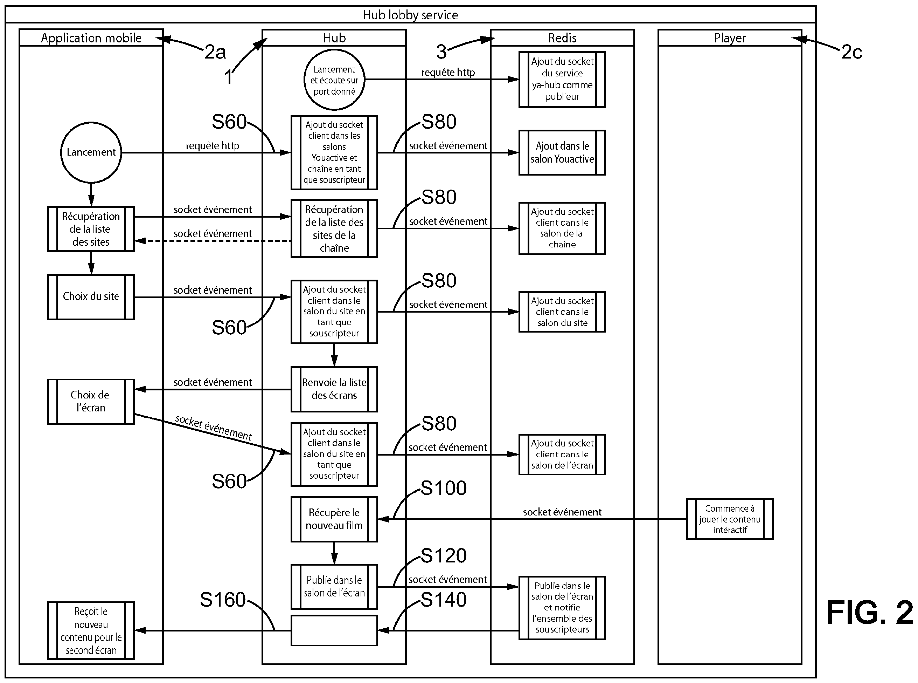

La figure 2 illustre un mode de réalisation particulier du mécanisme de souscription, qui est décrit ci-dessous à titre illustratif et nullement limitatif.

Après mise en tension du routeur 1 configuré en un mode d'écoute sur un port de connexion donné et l'ouverture d'une connexion de communication entre le routeur et le serveur de dictionnaire distant 3, le mécanisme de souscription peut comprendre les étapes mises en oeuvre par le routeur et consistant à :
- la réception S60, depuis un équipement mobile de communication 2a, d'une demande de souscription à un salon de discussion du fournisseur du système de communication,
- la transmission S80, au serveur de dictionnaire distant 3, de la demande de souscription pour inscription dudit équipement au salon de discussion du fournisseur du système de communication,
- le chargement d'une première liste de sites cinématographiques de la chaîne de cinémas possédant le système de communication mettant en oeuvre le procédé selon l'invention,
- la transmission S80, au serveur de dictionnaire distant, d'une demande de souscription pour inscription dudit équipement au salon de discussion de la chaîne de cinémas,
- la transmission, à l'équipement mobile de communication, de ladite première liste,
- la réception S60, depuis l'équipement mobile de communication, d'un choix de site réalisé par l'utilisateur parmi ladite première liste,
- la transmission S80, au serveur de dictionnaire distant, dudit choix de site pour inscription dudit équipement à un salon de discussion du site choisi,
- le chargement d'une liste de dispositifs de projection cinématographique 2b du site cinématographique choisi,
- la transmission, à l'équipement mobile de communication, de ladite deuxième liste,
- la réception S60, depuis l'équipement mobile de communication, d'un choix de dispositif de projection cinématographique réalisé par l'utilisateur parmi ladite deuxième liste,
- la transmission S80, au serveur de dictionnaire distant, dudit choix de dispositif de projection cinématographique pour inscription dudit équipement à un salon de discussion dudit dispositif.

Selon ce mécanisme de souscription, l'utilisateur se trouve ainsi inscrit à plusieurs salons de discussion. Tout utilisateur inscrit au salon de discussion d'un dispositif de projection cinématographique 2b choisi se trouve également inscrit aux salons de discussion du site cinématographique correspondant, de la chaîne de cinémas correspondante et du fournisseur du système de communication. Dès lors, il recevra toute notification d'événement publiée sur ces salons de discussion.

Il est ainsi avantageusement proposé une hiérarchisation des salons de discussion :
- celui de plus bas niveau est le salon de discussion d'un écran donné dans un cinéma précis et permet de recevoir les notifications associées à cet écran,
- celui du site est le niveau supérieur à celui de l'écran et permet de recevoir les notifications du site géographique,
- celui de la chaîne est le niveau supérieur à celui du site et permet de recevoir les notifications de la chaîne de cinéma,
- celui correspondant au fournisseur du système de communication est le niveau le plus haut et permet de recevoir les notifications du fournisseur du système de communication, l'ensemble des utilisateurs ayant téléchargé et installé l'application mobile dédiée étant, dans l'exemple donné, obligatoirement inscrit dans le salon de discussion du fournisseur du système de communication.

Comme suite à la souscription d'au moins un utilisateur, une application ou expérience interactive est mis en oeuvre par le routeur 1, qui à cette fin peut être amené à récupérer un contenu interactif correspondant stocké sur un serveur spécifique 2c. A titre d'exemple illustratif et nullement limitatif, ledit contenu audiovisuel peut consister en :
- un concours de bandes-annonces,
- un quiz interactif,
- une publicité interactive, et/ou
- une dédicace.

Le concours de bandes-annonces propose par exemple un choix de plusieurs bandes-annonces, et chaque spectateur peut voter pour son extrait favori. Le nombre de votes n'est pas limité : un spectateur peut donc voter plusieurs fois pour le même extrait, ou pour d'autres extraits. Les résultats des votes de la salle s'affichent en temps réel sur le grand écran. Le spectateur peut donc adapter son vote en fonction des résultats affichés.

Le quiz interactif consiste par exemple en des questions posées aux spectateurs sur le grand écran et les spectateurs proposent leur réponse via leur Smartphone (une seule réponse possible par question). Le spectateur qui répond correctement et le plus vite va voir s'afficher sur le grand écran son pseudo et son avatar, et avoir droit à une récompense. Il reçoit ensuite un message lui donnant les instructions à suivre pour recevoir sa récompense (bon pour une boisson gratuite, ...).

La publicité interactive consiste à proposer une publicité ciblée en fonction de l'audience connue sur la base d'un certain nombre d'informations collectées par exemple lors de la souscription, ces informations comportant par exemple l'origine géographique, le sexe, l'âge, etc. de chaque souscripteur.

La dédicace consiste en un texte personnel (maximum 140 caractères) inscrit sur une image choisie par le spectateur. La signature est composée du prénom suivi de l'initiale du nom de famille. Un système de modération permet d'assurer l'utilisation d'un vocabulaire respectueux pour tous.

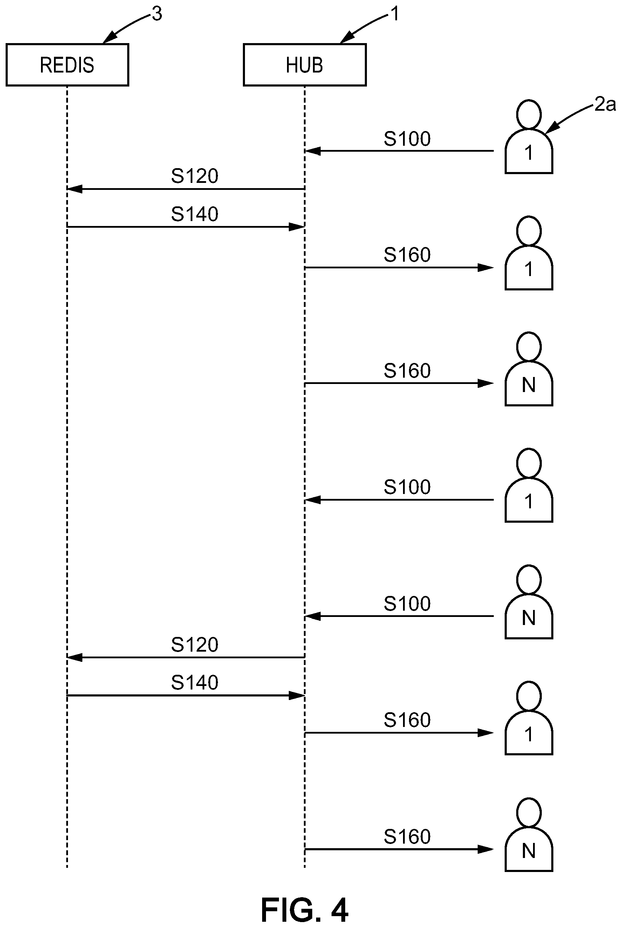

Tel qu'illustré sur la figure 4, le procédé de communication pour une application interactive selon l'invention comprend alors les étapes mises en oeuvre par le routeur 1 et consistant à :
- recevoir S100, depuis un noeud interactif 2a et 2b inscrit sur la base de données de comme ayant souscrit à un service de publication, une demande de publication comprenant une notification d'événement et au moins des données d'identification dudit service,
- transmettre S120, à la base de données 3, chaque demande de publication reçue pour identifier au moins un noeud interactif inscrit sur la base de données comme ayant souscrit audit service dont les données d'identification sont comprises dans la demande de publication,
- recevoir S140, depuis la base de données, une liste comprenant des données d'identification de chaque noeud interactif identifié, et
- transmettre S160, à chaque noeud interactif identifié, la notification d'événement reçue pour sa publication.

Par exemple, un spectateur se trouvant inscrit dans un salon de discussion correspondant à l'écran n°1 dans le site S, de la chaîne C, va recevoir les notifications correspondant à l'écran n°1, et celles publiées dans les salons de discussion du site S, de la chaîne C et du fournisseur du système de communication. Tous les Smartphones des utilisateurs inscrits dans le salon de discussion de l'écran n°1 sont synchronisés et reçoivent en temps réel toute nouvelle publication correspondant à ce salon.

Les informations publiées dans les salons de discussion peuvent consister en :
- des informations sur les films actuellement diffusés dans le cinéma ou sur ceux qui vont bientôt être diffusés, ces informations prenant par exemple la forme de notifications d'événements émises par un serveur de publication du cinéma et reçues par les équipements mobiles de communication inscrits au salon de discussion du site ou de la chaîne,
- les avis des spectateurs qui ont vu les films, avec possibilité de voter pour donner son propre avis, ces avis prenant par exemple la forme de notifications d'événements émises via les équipements mobiles de communication et reçues et traitées par le routeur ou retransmises par le routeur pour traitement,
- un vote pour choisir quel film sera projeté dans la plus grande salle lors de sa dernière diffusion,
- une réservation de places pour un prochain film,
- un contenu interactif transmis aux équipements mobiles de communication et/ou au dispositif de projection cinématographique,
- une dédicace à projeter sur le grand écran pendant la préséance.

Ainsi, le procédé de communication S selon l'invention propose une solution d'intercommunication temps réel massivement collective pour la synchronisation, la diffusion et la projection de contenus interactifs dans les cinémas.

Plus particulièrement, ce procédé est organisé autour de l'exécution d'événements pour fonctionner selon un mode asynchrone. Selon ce mode, chaque noeud interactif est prévenu de chaque événement sans qu'il ait eu à envoyer une requête à cette fin ou à attendre un rafraîchissement programmé de son application mobile. Dès lors, la nécessité d'échanges de données synchrones selon l'art antérieur est avantageusement contournée, pour permettre notamment aux spectateurs, via leur(s) équipement(s) mobile(s) de communication, de vivre des expériences ludiques et interactives en temps réel, sans dégradation de la qualité desdites expériences, y compris lorsque le nombre de joueurs simultanés dépasse quelques dizaines d'individus, voire quelques centaines d'individus.

Le procédé selon l'invention est basé sur un mécanisme de souscription et de publication par lequel les utilisateurs souscrivent à un salon de discussion, dans lequel tout souscripteur peut publier des messages, sans savoir quel(s) souscripteur(s) également inscrit(s) dans ce salon va les recevoir. Les utilisateurs reçoivent une notification d'événement à chaque publication. Plus particulièrement, chaque notification d'événement correspond à une mise à jour de l'application logicielle dédiée. Les souscripteurs peuvent s'inscrire dans un ou plusieurs salons, sans en connaître le(s) publieur(s), ni quand de nouvelles notifications d'événements seront publiées. Ce n'est plus l'utilisateur qui va à l'information, comme c'était le cas selon les procédés de communication synchrones, mais l'information qui vient à lui.

Le procédé selon l'invention permet également d'avoir une architecture décentralisée et non géo-localisée, et donc une communication multi-sites multi-utilisateurs. Chaque souscripteur peut potentiellement accéder à toutes les informations de tous les salons de discussion.

De plus, la communication devient indépendante du mode de connexion (Wifi, 3G, etc.) et du matériel utilisé. Un utilisateur peut recevoir une notification d'événement aussi bien sur son Smartphone, que sur sa tablette numérique, son ordinateur personnel, sa télévision connectée.

Le procédé permet d'atteindre une communication en temps réel pour la réalisation d'une tâche commune et ce, sans délai de réponse. Le procédé permet plus particulièrement d'avoir une communication et une interactivité collective de qualité, car il n'y a pas d'interruption temporelle entre le déclenchement, le traitement et le résultat d'un événement.

Par la notification des événements aux applications mobiles, la mise à jour de l'interface utilisateur n'est plus la conséquence d'une requête, ni d'un rafraîchissement, mais d'un événement indépendant engendré par la publication d'un message dans un salon de discussion. Le procédé permet de transmettre à l'utilisateur uniquement des informations pertinentes et déjà traitées, et donc de diminuer le temps de traitement et la latence. Lorsqu'un utilisateur souscrit à un salon de discussion, il devient dès lors disponible pour recevoir toutes les informations sur tous ses appareils connectés.

Selon une autre particularité, le routeur est propre à répartir les demandes qu'il reçoit depuis les noeuds interactifs entre plusieurs bases de données.

Selon une autre particularité, plusieurs routeurs sont agencés pour interconnecter la pluralité de noeuds interactifs et les autres composants du système de communication.

Le procédé selon l'une ou l'autre de ces deux dernières particularités permet avantageusement d'augmenter la capacité de traitement de requêtes concurrentes ou plus particulièrement simultanées. Plus particulièrement, le système de communication est avantageusement 'scalable', c'est-à-dire qu'il a la capacité de s'adapter à un changement d'ordre de grandeur de la demande ou équivalemment à toute montée en charge. En effet, la décentralisation de la plateforme a pour conséquence naturelle que pour répondre à toute montée en puissance des besoins, il suffit d'accroître le nombre de machines utilisées (nombre de routeurs et/ou nombre de base de données), sans que le fonctionnement de la plateforme ne soit modifié.

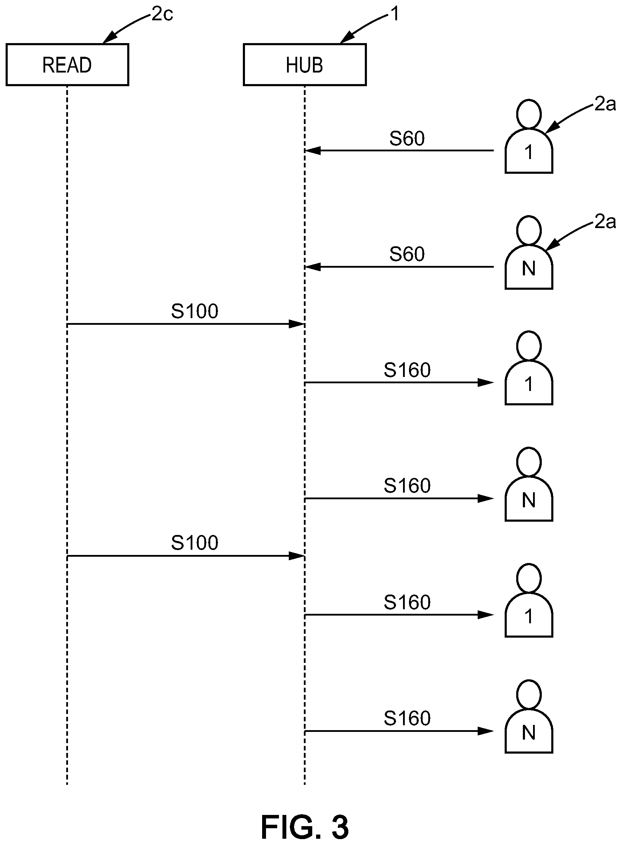

Afin d'illustrer ce qui précède, supposons, en référence à la figure 3, qu'un spectateur souscrive S60 à un salon de discussion associé à l'écran n° 1, sur lequel est diffusée une bande-annonce A ; il peut donc recevoir S160 sur son Smartphone des informations sur cette bande-annonce A. Lorsqu'une bande-annonce B va être diffusée sur l'écran n° 1, les informations correspondant à cette bande-annonce B vont être publiées dans le salon de discussion de l'écran n° 1, et par conséquent, tous les utilisateurs 1, ..., N qui sont inscrits à ce salon de discussion vont recevoir S160 sur leur Smartphone la même information en temps réel ; d'où une synchronisation entre la projection et l'émission de notifications d'événements depuis chaque dispositif de projection cinématographique 2b vers les équipements mobiles de communication 2a.

La communication avec le routeur s'effectue par exemple grâce au langage Node.js, qui permet de travailler avec le langage JavaScript dans un environnement asynchrone et événementiel. Ainsi, les opérations de lecture ou d'écriture sont parallélisées et orchestrées via le routeur. Le passage d'un serveur HTTP classique en PHP 5 avec des requêtes synchrones à un serveur en Node.js basé sur des requêtes asynchrones et événementielles permet d'augmenter notablement le nombre de requêtes traitées par le serveur, comme illustré dans le tableau comparatif ci-dessous.

| Mode | HTTP / PHP 5 | Node.js |
|---|---|---|
| Nombre de requêtes traitées par seconde | 2500 | 12500 |

Pour assurer le traitement temps-réel et permettre de notifier l'ensemble des applications mobiles en même temps, les deux technologies suivantes sont par exemple utilisées :
- le « socket.io » est un module Node.js qui permet d'assurer la liaison en temps réel entre tous les équipements mobiles de communication connectés à la plateforme,
- le « Redis » (pour « Remote Dictionnary Server » selon la terminologie anglo-saxonne), qui est le serveur de dictionnaire distant, est un système de gestion de base de données extrêmement performant dont la principale caractéristique est de conserver l'intégralité des données en mémoire. C'est lui qui gère les salons de discussion et le système de publication / souscription.

Le tableau suivant quantifie l'amélioration du temps de réponse résultant.

| Mode | HTTP / PHP 5 | Nodejs |
|---|---|---|
| Temps de réponse en seconde | 0,50 | 0,10 |

La présente invention est particulièrement adaptée à l'ensemble des salles de cinéma à travers le monde, mais également à toutes les infrastructures ouvertes au public et diffusant des contenus audiovisuels, telles que des salles de concert, des stades, des galeries marchandes, des conférences, des projections évènementielles, de l'apprentissage par Internet (E-learning), etc.

## Revendications

1. Procédé de communication (S) pour une application interactive entre terminaux dans une salle de projection sur écran, dans lequel chaque terminal est un noeud interactif connecté à un routeur associé à un serveur relié à un dispositif de projection cinématographique de la salle, le procédé comprenant les étapes mises en oeuvre par un routeur (1) interconnectant une pluralité de noeuds interactifs (2a, 2b) et au moins une base de données (3) et consistant à :
- Recevoir (S100), depuis un noeud interactif inscrit sur la base de données comme ayant souscrit à un service de publication, une demande de publication comprenant une notification d'événement et au moins des données d'identification dudit service,
- Transmettre (S 120), à la base de données, chaque demande de publication reçue pour identifier au moins un noeud interactif inscrit sur la base de données comme ayant souscrit audit service dont les données d'identification sont comprises dans la demande de publication,
- Recevoir (S140), depuis la base de données, les données d'identification de chaque noeud interactif identifié, et
- Transmettre (S 160), à chaque noeud interactif identifié, la notification d'événement reçue pour sa publication.

2. Procédé selon la revendication 1, **caractérisé en ce que** la pluralité de noeuds interactifs comprend une pluralité d'équipements mobiles de communication (2a) et au moins un dispositif de projection cinématographique (2b).

3. Procédé selon la revendication 2, **caractérisé en ce que** la pluralité de noeuds interactifs comprend en outre un lecteur de contenu interactif (2c).

4. Procédé selon la revendication 2 ou la revendication 3, **caractérisé en ce qu'**il comprend en outre les étapes consistant à :
- Recevoir (S60), depuis un équipement mobile de communication, une demande de souscription comprenant des données d'identification dudit équipement et des données d'identification d'un fournisseur de service et/ou d'une chaîne de cinéma et/ou d'un dispositif de projection cinématographique, pour souscrire à un service de publication associé au moins audit fournisseur de service et/ou à ladite chaîne de cinéma et/ou audit dispositif de projection cinématographique, respectivement,
- Transmettre (S80), à la base de données, les données d'identification dudit équipement et dudit fournisseur de service et/ou de ladite chaîne de cinéma et/ou dudit dispositif de projection cinématographique pour inscription dudit équipement audit service de publication.

5. Procédé selon l'une des revendications 1 à 4, **caractérisé en ce que** le routeur (1) est propre à répartir les demandes qu'il reçoit depuis les noeuds interactifs entre plusieurs bases de données.

6. Procédé selon l'une des revendications 1 à 5, **caractérisé en ce que** plusieurs routeurs (1) sont agencés pour interconnecter la pluralité de noeuds interactifs et ladite au moins une base de données.

7. Procédé selon l'une des revendications 1 à 6, **caractérisé en ce que** les étapes de réception/transmission (S100, S120, S140 et S160) sont réalisées selon un protocole de multiplexage d'entrées/sorties.

8. Procédé selon l'une des revendications 1 à 7, **caractérisé en ce que** les communications reçues/transmises sont programmées en langage Node.js.

9. Procédé selon l'une des revendications 1 à 8, **caractérisé en ce que** la base de données (3) comprend un serveur de dictionnaire distant.

10. Programme d'ordinateur comportant des instructions pour la mise en oeuvre du procédé selon l'une quelconque des revendications 1 à 9, lorsque ce programme est exécuté par un processeur.

## Patentansprüche

1. Kommunikationsverfahren (S) für eine interaktive Anwendung zwischen Endgeräten in einem Bildschirmprojektionsraum, wobei jedes Endgerät ein interaktiver Knoten (2a) ist, der mit einem Router verbunden ist, der einem mit einer kinematografischen Projektionsvorrichtung (2b) des Raumes verbundenen Server zugeordnet ist, wobei das Verfahren die folgenden von einem Router (1), der eine Vielzahl von interaktiven Knoten (2a, 2b) und mindestens eine Datenbank (3) miteinander verbindet, ausgeführten Schritte aufweist:
- Empfangen (S100) von einem interaktiven Knoten, der bei der Datenbank als bei einem Publikationsdienst eingeschrieben registriert ist, eines Publikationsantrages, der eine Ereignismitteilung und zumindest Identifikationsdaten des besagten Dienstes umfassen,
- Übertragen (S120) an die Datenbank jedes empfangenen Publikationsantrages zur Identifizierung wenigstens eines interaktiven Knotens, der bei der Datenbank als bei dem besagten Publikationsdienst eingeschrieben registriert ist und dessen Identifikationsdaten in dem Publikationsantrag enthalten sind,
- Empfangen (S140) von der Datenbank die Identifikationsdaten jedes identifizierten interaktiven Knotens, und
- Übertragen (S160) an jeden identifizierten interaktiven Knoten der zu seiner Veröffentlichung empfangenen Ereignismitteilung.

2. Verfahren gemäß Anspruch 1, **dadurch gekennzeichnet, dass** die Vielzahl der interaktiven Knoten eine Vielzahl von mobilen Kommunikationsgeräten (2a) und zumindest eine kinematografische Projektionsvorrichtung (2b) umfasst.

3. Verfahren gemäß Anspruch 2, **dadurch gekennzeichnet, dass** die Vielzahl der interaktiven Knoten darüber hinaus ein Abspielgerät (2c) für interaktiven Inhalt umfasst.

4. Verfahren gemäß Anspruch 2 oder gemäß Anspruch 3, **dadurch gekennzeichnet, dass** es darüber hinaus die folgenden Schritte aufweist:
- Empfangen (S60) von einem mobilen Kommunikationsgerät eines Einschreibungsantrages, der Identifikationsdaten des besagten Geräts und Identifikationsdaten eines Serviceproviders und/oder einer Kinokette und/oder einer kinematografischen Projektionsvorrichtung umfasst, um sich bei einem Publikationsdienst, der zumindest dem besagten Serviceprovider und/oder der besagten Kinokette und/oder der besagten kinematografischen Projektionsvorrichtung zugeordnet ist, einschreiben zu lassen,
- Übermitteln (S80) an die Datenbank der Identifikationsdaten des besagten Geräts und des besagten Serviceproviders und/oder der besagten Kinokette und/oder der besagten kinematografischen Projektionsvorrichtung zur Einschreibung des besagten Gerätes bei dem besagten Publikationsdienst.

5. Verfahren gemäß einem der Ansprüche 1 bis 4, **dadurch gekennzeichnet, dass** der Router (1) geeignet ist, Anträge, die er von den interaktiven Knoten erhält, an mehrere Datenbanken zu verteilen.

6. Verfahren gemäß einem der Ansprüche 1 bis 5, **dadurch gekennzeichnet, dass** mehrere Router (1) angeordnet sind, um die Vielzahl der interaktiven Knoten und der besagten mindestens einen Datenbank miteinander zu verbinden.

7. Verfahren gemäß einem der Ansprüche 1 bis 6, **dadurch gekennzeichnet, dass** die Schritte des Empfangens/Übermittelns (S100, S120, S140 und S160) gemäß einem Eingangs- / Ausgangsmultiplexprotokoll realisiert sind.

8. Verfahren gemäß einem der Ansprüche 1 bis 7, **dadurch gekennzeichnet, dass** die empfangenen/übermittelten Mitteilungen in der Sprache Node.js programmiert sind.

9. Verfahren gemäß einem der Ansprüche 1 bis 8, **dadurch gekennzeichnet, dass** die Datenbank (3) einen entfernten Wörterbuchserver umfasst.

10. Computerprogramm umfassend Anweisungen zur Durchführung des Verfahrens gemäß einem der Ansprüche 1 bis 9, wenn das Programm auf einem Prozessor ausgeführt wird.

## Claims

1. Method of communication (S) for an interactive application between terminals in a screen projection room, wherein each terminal is an interactive node connected to a router associated with a server connected to a cinematographic projection device of the room,
the method comprising the steps implemented by a router (1) interconnecting a plurality of interactive nodes (2a, 2b) and at least one database (3) and consisting in:
- Receiving (S100), from an interactive node registered on the database as having subscribed to a publication service, a publication request comprising a notification of an event and at least data for identifying said service,
- Transmitting (S120), to the database, each publication request received in order to identify at least one interactive node registered on the database as having subscribed to said service of which the identification data is included in the publication request,
- Receiving (S140), from the database, the identification data of each interactive node identified, and
- Transmitting (S160), to each interactive node identified, the event notification received for its publication.

2. Method according to claim 1, **characterized in that** the plurality of interactive nodes comprises a plurality of mobile communication devices (2a) and at least one cinematographic projection device (2b).

3. Method according to claim 2, **characterized in that** the plurality of interactive nodes further comprises an interactive content reader (2c).

4. Method according to claim 2 or claim 3, **characterized in that** it further comprises the steps consisting in:
- Receiving (S60), from a mobile communication device, a subscription request comprising data for identifying said device and data for identifying a service provider and/or a cinema chain and/or a cinematographic projection device, in order to subscribe to a publication service associated with at least said service provider and/or with said cinema chain and/or with said cinematographic projection device, respectively,
- Transmitting (S80), to the database, the identification data of said device and of said service provider and/or of said cinema chain and/or of said cinematographic projection device for registration of said device at said publication service.

5. Method according to one of claims 1 to 4, **characterized in that** the router (1) is able to distribute the requests that it receives from the interactive nodes between several databases.

6. Method according to one of claims 1 to 5, **characterized in that** several routers (1) are arranged to interconnect the plurality of interactive nodes and said at least one database.

7. Method according to one of claims 1 to 6, **characterized in that** the steps of receiving/transmitting (S100, S120, S140 and S160) are carried out according to an input/output multiplexing protocol.

8. Method according to one of claims 1 to 7, **characterized in that** the communications received/transmitted are programmed in the Node.js language.

9. Method according to one of claims 1 to 8, **characterized in that** the database (3) comprises a remote dictionary server.

10. Computer program comprising instructions for implementing the method according to any of claims 1 to 9, when this program is executed by a processor.
